(19) Europäisches Patentamt
European Patent Office
Office européen des brevets

(11) **EP 1 242 723 B1**

(12) **FASCICULE DE BREVET EUROPEEN**

(45) Date de publication et mention
de la délivrance du brevet:
**18.01.2006 Bulletin 2006/03**

(51) Int Cl.:
*F01N 9/00* *(2006.01)*    *F01N 11/00* *(2006.01)*

(21) Numéro de dépôt: **00967965.5**

(22) Date de dépôt: **06.10.2000**

(86) Numéro de dépôt international:
**PCT/FR2000/002780**

(87) Numéro de publication internationale:
**WO 2001/027447 (19.04.2001 Gazette 2001/16)**

(54) **PROCEDE DE DIAGNOSTIC D'UN SYSTEME D'ECHAPPEMENT DE MOTEUR A COMBUSTION**

DIAGNOSEVERFAHREN DES ABGASSYSTEMS EINER BRENNKRAFTMASCHINE

DIAGNOSTIC METHOD FOR AN EXHAUST SYSTEM OF A COMBUSTION ENGINE

(84) Etats contractants désignés:
**DE ES GB IT**

(30) Priorité: **08.10.1999 FR 9912548**

(43) Date de publication de la demande:
**25.09.2002 Bulletin 2002/39**

(73) Titulaire: **Renault s.a.s.**
**92100 Boulogne Billancourt (FR)**

(72) Inventeurs:
• **ARCHIMBAUD, Marie-Laure**
**F-75010 Paris (FR)**
• **HEKIMIAN, Georges**
**F-92300 Levallois (FR)**
• **LEPRIEUR, Laurent**
**F-91120 Palaiseau (FR)**
• **MEURISSE, Olivier**
**F-92160 Antony (FR)**

(56) Documents cités:
**EP-A- 0 525 566**       **US-A- 5 716 586**

• **PATENT ABSTRACTS OF JAPAN vol. 017, no. 294 (M-1424), 7 juin 1993 (1993-06-07) & JP 05 018229 A (NISSAN MOTOR CO LTD), 26 janvier 1993 (1993-01-26)**

## Description

La présente invention concerne un procédé de diagnostic d'un système d'échappement de moteur à combustion du type comportant un filtre à particules et des moyens pilotés d'aide à la régénération.

Les normes concernant la pollution et la consommation des moteurs à combustion interne équipant notamment les véhicules automobiles ou routiers, se sévérisent chaque jour davantage dans l'ensemble des pays industrialisés. L'industrie automobile est donc aujourd'hui occupée à trouver des solutions techniques pour répondre à ces obligations et ce, sans trop pénaliser ni les performances des moteurs ni leur prix de revient.

Parmi les systèmes connus pour éliminer les particules émises par les moteurs à combustion interne et en particulier les moteurs diesels, on peut citer les filtres à particules insérés dans les lignes d'échappement des moteurs. Ces filtres sont adaptés pour piéger les particules ou suies contenues dans les gaz d'échappement. Des dispositifs de régénération pilotés permettent de brûler périodiquement les particules piégées dans les filtres et éviter le colmatage de ces derniers.

Dans le cadre notamment des réglementations antipollution telles que la norme OBD2 (On Board Diagnostic Level 2), il est prévu que les systèmes électroniques de contrôle des moteurs qui équipent les véhicules automobiles ou routiers doivent être aptes à surveiller l'efficacité dans le temps des éléments ayant une influence sur les émissions et de diagnostiquer puis alerter le conducteur en cas de dégradation des émissions au-delà des seuils prévus dans la réglementation.

C'est ainsi qu'il est prévu d'implanter dans les systèmes électroniques de commande des moteurs, des moyens de diagnostic des éventuels dysfonctionnements des différents moyens qui participent à l'élimination des particules.

Ces moyens de diagnostic ont pour objet de provoquer, lorsqu'il y a défaillance d'un élément agissant sur le niveau de pollution du moteur, soit l'activation de modes de fonctionnement dégradés et/ou l'allumage d'un voyant au tableau de bord prévenant le conducteur, soit la mise en oeuvre de mesures correctives, soit encore l'arrêt du véhicule.

Ainsi, le document JP-A-D5.018.229 divulgue un procédé de surveillance de l'état de chargement d'un filtre à particules. Ce procédé est destiné à améliorer la régénération du filtre à particules. Ce document propose ainsi de provoquer la régénération du filtre à particules lorsque le filtre à particules est soumis à des conditions particulières qui sont détectables en fonction de la différence de pression entre les gaz d'échappement en amont du filtre à particules et les gaz d'échappement en aval du filtre à particules. Cependant, ce document ne permet pas de diagnostiquer un dysfonctionnement du filtre à particules comme cela est requis par la norme OBD2.

La présente invention a donc pour objet un procédé de diagnostic du bon fonctionnement d'un système d'échappement du type comportant un filtre à particules et des moyens d'aide à la régénération pilotés, procédé qui soit à la fois simple à mettre en oeuvre et efficace.

Le procédé de diagnostic selon l'invention concerne un système d'échappement de moteur à combustion destiné à supprimer les rejets de particules émises par le moteur comportant un filtre à particules et des moyens pilotés pour régénérer le filtre comprenant des moyens de contrôle et de mesure du niveau de chargement en particules piégées dans le filtre.

Selon l'invention, le procédé de diagnostic est caractérisé en ce qu'il consiste à élaborer par des moyens de calcul une estimation du niveau en chargement en particules piégées dans le filtre et à comparer cette estimation à la valeur produite par lesdits moyens de contrôle et de mesure.

Selon une autre caractéristique du procédé objet de l'invention, l'estimation produite par les moyens de calcul prend également en compte le fonctionnement du filtre et en particulier les phases de régénération.

Selon une autre caractéristique du procédé objet de l'invention, les moyens de calcul utilisent un modèle d'émission des particules par le moteur, ce modèle permettant d'estimer pour une durée donnée et pour un point de fonctionnement donné, la quantité de particules émises.

Selon une autre caractéristique du procédé objet de l'invention, les moyens de calcul utilisent un modèle de fonctionnement du filtre notamment quant à la quantité de particules brûlées dans le filtre selon les conditions de fonctionnement du filtre.

Selon une autre caractéristique du procédé objet de l'invention, il comporte les étapes suivantes :

- déterminer par lesdits moyens de contrôle, pour une période donnée, la valeur mesurée du chargement en particules piégées dans le filtre à partir des informations délivrées par lesdits moyens de mesure;
- déterminer par lesdits moyens de calcul, pour la même période, la valeur estimée du chargement du filtre ;
- comparer ladite valeur mesurée à ladite valeur estimée cas d'écart significatif en déduire un dysfonctionnement dans le fonctionnement du système d'échappement.

Selon une autre caractéristique du procédé objet de l'invention, ladite période s'étale à l'intérieur d'une phase de fonctionnement du système d'échappement pendant laquelle le filtre à particules piège les particules.

Selon une autre caractéristique du procédé objet de l'invention, si la valeur mesurée lors d'une phase de stockage est inférieure à la valeur estimée, on en déduit que le filtre à particules est détérioré et ne remplit donc plus sa fonction de filtration.

Selon une autre caractéristique du procédé objet de l'invention, ladite période s'étale à l'intérieur d'une phase de fonctionnement du système d'échappement pendant laquelle le filtre à particules est régénéré.

Selon une autre caractéristique du procédé objet de l'invention, si la valeur mesurée lors de la régénération du filtre est inférieure à la valeur estimée, on en déduit que les moyens de régénération sont défaillants.

Selon une autre caractéristique du procédé objet de l'invention, les moyens de contrôle du niveau de chargement en particules du filtre comportent des moyens de mesure de la perte de charge aux bornes du filtre.

On comprendra mieux les buts, aspects et avantages de la présente invention, d'après la description présentée ci-après d'un mode de réalisation de l'invention, donné à titre d'exemple non limitatif, en se référant aux dessins annexés, dans lesquels :

- la figure 1 est une vue schématique d'un moteur à combustion interne équipé d'un filtre à particules, mettant en oeuvre le procédé selon l'invention ;

- la figure 2 est un chronogramme précisant le procédé selon l'invention.

Seuls les éléments nécessaires à la compréhension de l'invention ont été représentés.

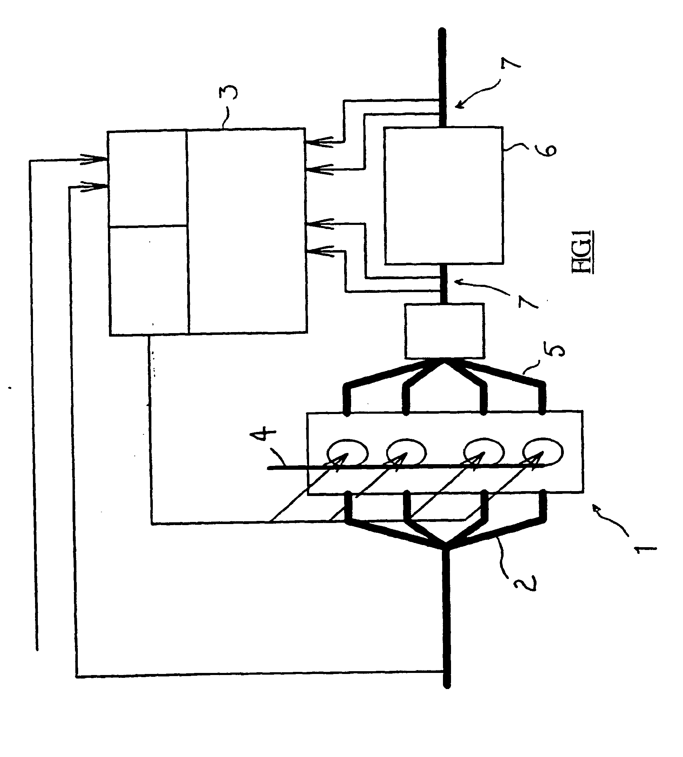

En se reportant sur la figure 1, on voit la structure générale d'un moteur à combustion interne référence 1, par exemple un moteur diesel pour véhicule automobile à quatre cylindres et injection directe de carburant, équipé d'un système d'échappement permettant la filtration des particules émises.

De façon classique, le moteur 1 est alimenté en air à travers un circuit d'admission 2. Des capteurs appropriés équipent ce circuit d'admission pour fournir à un calculateur de contrôle moteur des informations concernant la pression, la température ou encore le débit de l'air d'admission.

L'alimentation en carburant est assurée par des injecteurs électromagnétiques non figurés débouchant dans les chambres de combustion et pilotés par le calculateur de contrôle moteur 3 à partir d'un circuit de carburant sous pression 4 de type common rail.

En sortie du moteur 1, les gaz d'échappement évacués dans la ligne 5 traversent un filtre à particules 6. Différents capteurs 7, tels que des capteurs de pression et de température, placés en amont et en aval du filtre, fournissent au calculateur de contrôle moteur 3 des informations correspondantes.

Le calculateur d'injection 3 commande donc à partir des informations délivrées par les différents capteurs et en particulier de la masse d'air admise et du régime moteur ainsi qu'à partir de formules et de calibrations mémorisées permettant le réglage optimal du moteur, le fonctionnement des injecteurs et notamment l'instant de début d'injection et la durée d'ouverture des injecteurs qui correspond à une quantité de carburant injectée et donc à une richesse du mélange remplissant les chambres de combustion.

Le calculateur d'injection 3 se compose essentiellement d'un microprocesseur ou unité centrale CPU, de mémoires vives RAM, de mémoires mortes ROM, de convertisseurs analogiques-numériques A/D, et différentes interfaces d'entrées et de sorties.

Le microprocesseur du calculateur d'injection 3 comporte des circuits électroniques et des logiciels appropriés pour traiter les signaux en provenance de différents capteurs adaptés, en déduire les états du moteur et générer les signaux de commande appropriés à destination notamment des différents actuateurs pilotés.

Le calculateur 3 est également adapté pour assurer le bon fonctionnement du système d'échappement et notamment du filtre à particules 6. En particulier, le calculateur 3 déduit à partir des informations fournies notamment par les capteurs 7, le niveau de remplissage du filtre à particules en suie et déclenche selon des stratégies adaptées une phase de régénération. Cette phase de régénération consiste essentiellement à augmenter la température des gaz d'échappement traversant le filtre 6 de façon à enflammer les particules piégées.

Différents moyens pour élever la température des gaz d'échappement peuvent être employés, on peut par exemple citer des moyens de chauffage électrique ou encore, comme dans l'exemple illustré, une élévation de la température des gaz d'échappements. Cette élévation de la température des gaz d'échappement est réalisée par simple commande des injecteurs par exemple en injectant en phase détente une quantité additionnelle de carburant et ce, pendant un nombre donné de cycles moteur.

Le calculateur 3 est également adapté pour mettre en oeuvre le procédé de diagnostic selon l'invention. Ce procédé consiste essentiellement à comparer le niveau de chargement du filtre 6 déduit des mesures faites notamment au moyen des capteurs 7, à une estimation de ce chargement déduite d'un modèle de fonctionnement du moteur et d'un modèle de fonctionnement du système d'échappement.

Différentes méthodes sont possibles pour déterminer à partir notamment des mesures faites à partir des capteurs 7, le chargement du filtre 6. On peut, par exemple, citer celle décrite par la Demanderesse dans le document FR98-09232. Selon cette méthode, l'encrassement ou le chargement du filtre 6 en particules est donné par la formule :

$$(I) \quad \Delta P = c.A + B,$$

avec

$\Delta P$ : pression différentielle amont-aval du filtre (mesurée à partir d'un capteur de pression différentielle) ;
$c$ : chargement du filtre ;
$A$ : débit volumique des gaz traversant le filtre ;
$B$ : offset du capteur de pression différentielle.

Le débit volumique des gaz traversant le filtre A peut être donné par la formule :

$$(II) \quad A = (Mair + Mc).N.T/P$$

avec

Mair : masse d'air entrant dans le moteur ;

Mc : masse de carburant injectée ;

T : température des gaz en amont du filtre

P : pression des gaz en amont du filtre.

On voit donc qu'il suffit de deux points de mesure $(\Delta P1, A1)$, $(\Delta P2, A2)$, voire d'un seul si b est prédéterminé, pour obtenir c.

Parallèlement à cette détermination du chargement du filtre obtenu par mesures, il est apparu possible d'estimer le chargement du filtre du seul suivi du fonctionnement moteur et du fonctionnement du système d'échappement. En effet, il est possible d'associer à chaque point de fonctionnement du moteur (cartographie de type débit/couple) et pour une durée de fonctionnement donnée, une quantité de particules produites par ce dernier. Cette quantité peut être obtenue par mesures au banc d'essai et être cartographiée en fonction d'un nombre plus ou moins important de paramètres (débit d'air, régime, vieillissement).

Il suffit donc, à partir d une telle cartographie, de suivre pendant une période donnée, les différents états de fonctionnement du moteur pour obtenir par intégration successive des différentes quantités correspondantes de particules produites par le moteur, la quantité totale de particules produites par le moteur 1.

Pendant cette période de fonctionnement du moteur, l'accroissement du chargement du filtre correspond donc à toute ou partie de la quantité de particules émise par le moteur moins la quantité de particules brûlée dans le filtre. La proportion des particules piégées peut être ajustée ou bien encore estimée à 100%, en faisant l'hypothèse que toutes les particules produites sont piégées dans le filtre.

La quantité de particules brûlée dans le filtre peut être également déduite d'un modèle de fonctionnement du filtre . En fonction du chargement en particules, de la température des gaz et de leur débit, il est, en effet, possible de définir un taux de combustion des particules piégées.

Ce modèle peut être plus ou moins élaboré, on peut par ailleurs estimer que dans certaines conditions et en particulier lors des phases de régénération (température élevée pendant une longue durée par exemple), la combustion est complète et qu'il ne reste pas de particules dans le filtre. Le chargement du filtre peut alors être remis à zéro.

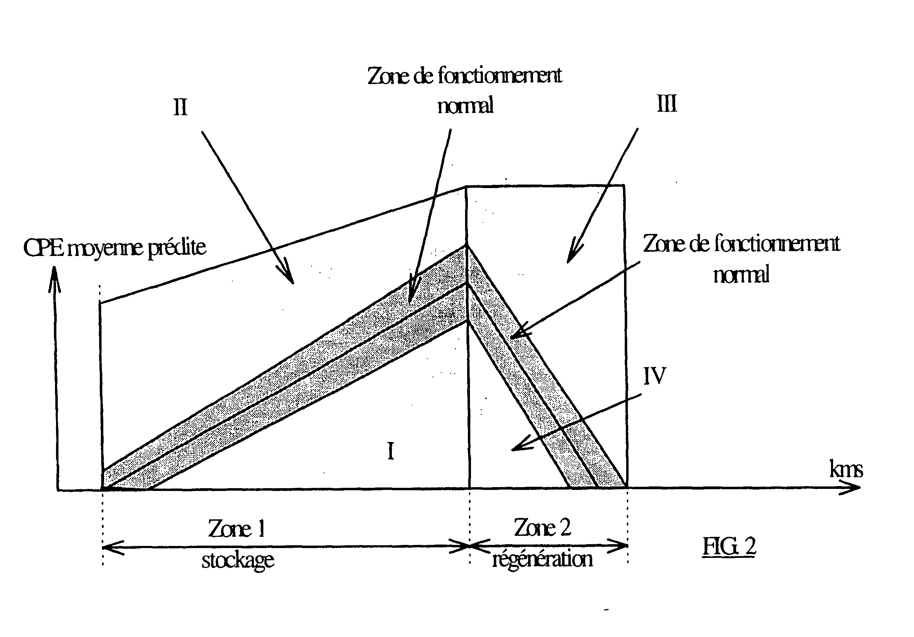

En se reportant sur la figure 2, on a précisé la mise en oeuvre du procédé selon l'invention. A partir du suivi des fonctionnements du moteur et du système d'échappement, on en déduit l'évolution estimée du chargement du filtre 6. Il suffit alors de comparer à cette valeur estimée, la valeur mesurée pour en déduire le bon fonctionnement du système d'échappement ou bien l'existence de dysfonctionnements et opérer le diagnostic souhaité.

En effet, si l'écart entre la valeur mesurée et la valeur estimée du chargement est inférieure en valeur absolue à un seuil calibré autour de la valeur estimée, alors on en déduit que le système fonctionne bien. Si la valeur mesurée se retrouve à l'extérieur de cette bande de valeurs acceptables alors, on en déduit qu'il y a dysfonctionnement.

Suivant que la période de comparaison s'est effectuée en phase de stockage où en phase de régénération, il est possible de caractériser plus précisément le dysfonctionnement.

En phase de stockage, si la valeur mesurée est inférieure aux valeurs autorisées (domaine référencé I) alors, on peut conclure que le filtre est percé ou détérioré : en effet, le filtre piège sensiblement moins de particules que le moteur en produit....

En.phase de stockage, si la valeur mesurée est supérieure aux valeurs autorisées (domaine référencé II) alors, on peut conclure que la régénération précédente ne s'est pas bien passée puisque le filtre contient plus de particules qu'il n'en devrait.

En phase de régénération, si la valeur mesurée est supérieure aux valeurs autorisées (domaine référencé III) alors, on peut conclure que la régénération ne se passe pas correctement et qu'en particulier l'élévation de température est insuffisante (ainsi, lorsque les moyens d'aide à la régénération utilisent des additifs destinés à réduire la température de combustion des suies, on peut par exemple conclure à une additivation insuffisante).

En phase de régénération, si la valeur mesurée est inférieure aux valeurs autorisées (domaine référencé IV) on peut alors conclure que la régénération ne se passe pas correctement et qu'en particulier l'élévation de température est trop forte (lorsque les moyens d'aide à la régénération utilisent des additifs destinés à réduire la température de combustion des suies, on peut par exemple conclure à une additivation trop importante).

Bien entendu, l'invention n'est nullement limitée au mode de réalisation décrit et illustré qui n'a été donné qu'à titre d'exemple.

Ainsi, le procédé selon l'invention consiste à comparer l'évolution du chargement selon qu'elle est estimée par le système de contrôle moteur 3 à partir de modèles prédéterminés de fonctionnement du moteur et de fonctionnement du filtre à particules, ou qu'elle est déterminée par le même système de contrôle moteur 3, à partir des mesures et notamment de la perte de charge aux bornes du filtre 6.

Cette évolution du chargement est prise en compte pour les besoins du procédé de diagnostic pour une période donnée. Cette période est de préférence comprise à l'intérieur d'une phase de fonctionnement donnée du filtre : stockage des particules ou régénération. Cette période peut toutefois s'étaler sur plus d'une phase de fonctionnement du filtre 6.

De même, la comparaison objet du présent diagnostic peut porter non pas entre le chargement mesuré et le chargement estimé, mais entre la perte de charge mesurée aux bornes du filtre et la perte de charge estimée. En effet, perte de charge et chargement sont liés pour un débit de gaz d'échappement donné, cf. formule I donnée ci-dessus.

## Revendications

1. Procédé de diagnostic d'un système d'échappement de moteur à combustion (1) destiné à supprimer les rejets des particules émises par le moteur (1) comportant un filtre à particules (6) et des moyens pilotés (3,7) pour régénérer le filtre (6), lesdits moyens pilotés comprenant des moyens de mesure et de contrôle du niveau de chargement en particules piégées dans le filtre, le procédé consistant à élaborer par des moyens de calcul (3) une estimation du niveau de chargement en particules piégées dans ledit filtre (6) et à comparer cette estimation à la valeur produite par lesdits moyens de contrôle (3) et de mesure (7), comportant les étapes suivantes :

   - déterminer par lesdits moyens de contrôle, pour une période donnée, la variation mesurée du chargement en particules piégées dans le filtre (6) à partir des informations délivrées par les moyens de mesure (7) ;
   - déterminer par lesdits moyens de calcul (3), pour ladite période, la valeur estimée du chargement ;
   - **caractérisé en ce que** l'on compare ladite valeur mesurée à ladite valeur estimée et en cas d'écart significatif, ou en déduit un dysfonctionnement dans le fonctionnement du système d'échappement.

2. Procédé de diagnostic selon la revendication 1, **caractérisé en ce que** l'estimation produite par lesdits moyens de calcul prend également en compte le fonctionnement du filtre et en particulier les phases de régénération.

3. Procédé de diagnostic selon l'une quelconque des revendications 1 à 2, **caractérisé en ce que** lesdits moyens de calcul utilisent un modèle d'émission des particules par le moteur (1), ledit modèle permettant d'estimer pour une durée donnée et pour un point de fonctionnement donné, la quantité de particules émises.

4. Procédé de diagnostic selon l'une quelconque des revendications 1 à 3, **caractérisé en ce que** lesdits moyens de calcul utilisent un modèle de fonctionnement du filtre notamment quant à la quantité de particules brûlées dans le filtre (6) selon les conditions de fonctionnement du filtre (6).

5. Procédé de diagnostic selon l'une des revendications 1 à 4, **caractérisé en ce que** ladite période est comprise à l'intérieur d'une phase de fonctionnement pendant laquelle le filtre à particules piège les particules.

6. Procédé de diagnostic selon la revendication 5, **caractérisé en ce que** si la valeur mesurée est inférieure à la variation estimée, on en déduit que le filtre à particules est détérioré et ne remplit donc plus sa fonction de filtration.

7. Procédé de diagnostic selon l'une des revendications 1 à 4, **caractérisé en ce que** ladite période est comprise à l'intérieur d'une phase de fonctionnement pendant laquelle le filtre à particules est régénéré.

8. procédé de diagnostic selon la revendication 7, **caractérisé en ce que** si la valeur mesurée est inférieure à la valeur estimée, on en déduit que les moyens de régénération sont défaillants.

## Patentansprüche

1. Diagnoseverfahren für ein Auspuffsystem eines Verbrennungsmotors (1), welches dazu bestimmt ist, den Ausstoß von dem Motor (1) abgegebenen Partikeln zu beseitigen, mit einem Partikelfilter (6) und gesteuerten Mitteln (3, 7) zur Regeneration des Filters (6), wobei die gesteuerten Mittel zum Messen und Kontrollieren des Beladungsstands an in dem Filter gefangenen Teilchen umfassen, wobei das Verfahren darin besteht, anhand von Rechenmitteln (3) eine Schätzung des Beladungsstands an in dem Filter (6) gefangenen Teilchen zu ermitteln und diese Schätzung mit dem Wert zu vergleichen, der durch die Mittel zur Kontrolle (3) und Messung (7) erzeugt wird, mit folgenden Schritten:

   - Bestimmen durch die Kontrollmittel der(des) gemessenen Veränderung(*Wertes*) der Beladung an in dem Filter (6) gefangenen Teilchen ausgehend von den durch die Messmittel (7) gelieferten Informationen für einen gegebenen Zeitraum;
   - Bestimmen des geschätzten Beladungswertes durch die Rechenmittel (3) für den besagten Zeitraum;
   - **dadurch gekennzeichnet, dass** der gemessene Wert mit dem geschätzten Wert verglichen wird und dass im Falle einer signifikanten Abweichung daraus eine Fehlfunktion im Betrieb des Auspuffsystems abgeleitet wird.

2. Diagnoseverfahren gemäß Anspruch 1, **dadurch gekennzeichnet, dass** die durch die Rechenmittel erzeugte Schätzung ebenso die Funktionsweise des Filters und insbesondere die Regenerationsphasen berücksichtigt.

3. Diagnoseverfahren gemäß einem der Ansprüche 1 bis 2, **dadurch gekennzeichnet, dass** die Rechenmittel ein Modell der Partikelemission des Motors (1) verwenden, wobei das Modell es erlaubt, für eine gegebene Zeitdauer und für einen gegebenen Betriebspunkt die Menge an ausgestoßenen Teilchen zu schätzen.

4. Diagnoseverfahren gemäß einem der Ansprüche 1 bis 3, **dadurch gekennzeichnet, dass** die Rechenmittel ein Funktionsmodell des Filters insbesondere in Bezug auf die im Filter (6) in Abhängigkeit der Betriebsbedingungen des Filters (6) verbrannte Partikelmenge verwenden.

5. Diagnoseverfahren gemäß einem der Ansprüche 1 bis 4, **dadurch gekennzeichnet, dass** sich der besagte Zeitraum innerhalb einer Betriebsphase befindet, während welcher der Partikelfilter Partikel fängt.

6. Diagnoseverfahren gemäß Anspruch 5, **dadurch gekennzeichnet, dass**, wenn der gemessene Wert geringer ist als die(der) geschätzte Veränderung(Wert), daraus abgeleitet wird, dass der Partikelfilter beschädigt ist und folglich nicht mehr seine Filterfunktion erfüllt.

7. Diagnoseverfahren gemäß einem der Ansprüche 1 bis 4, **dadurch gekennzeichnet, dass** der besagte Zeitraum sich innerhalb einer Betriebsphase befindet, während welcher der Partikelfilter regeneriert wird.

8. Diagnoseverfahren gemäß Anspruch 7, **dadurch gekennzeichnet, dass** wenn der gemessene Wert geringer ist als der geschätzte Wert, daraus abgeleitet wird, dass die Regenerationsmittel defekt sind.

**Claims**

1. A diagnostic method for an exhaust system of an internal combustion engine (1), which is intended to suppress the discharges of particles emitted by the engine (1) comprising a particulates filter (6) and pilot-controlled means (3, 7) for regenerating the filter (6), said pilot-controlled means comprising means for measuring and monitoring the level of loading of particles trapped in the filter, the method comprising the production by computing means (3) of an estimate of the level of loading of particles trapped in said filter (6) and a comparison of said estimate with the value produced by said monitoring (3) and measuring (7) means,
comprising the following steps:

   - determining by said monitoring means for a given period the measured variation in the loading of particles trapped in the filter (6) from the items of information delivered by the measuring means (7); and
   - determining the estimated value of the loading by said computing means (3) for said period;
   - **characterised by** comparing said measured value with said estimated value and in the event of a significant difference deducing therefrom a malfunction in the operation of the exhaust system.

2. A diagnostic method according to claim 1 **characterised in that** the estimate produced by said computing means also takes account of operation of the filter and in particular the regeneration phases.

3. A diagnostic method according to any one of claims 1 to 2 **characterised in that** said computing means use a model in respect of emission of the particles by the engine (1), said model making it possible to estimate the amount of emitted particles for a given duration and for a given operating point.

4. A diagnostic method according to any one of claims 1 to 3 **characterised in that** said computing means use a model in respect of operation of the filter in particular in regard to the amount of particles burnt in the filter (6) according to the operating conditions of the filter (6).

5. A diagnostic method according to one of claims 1 to 4 **characterised in that** said period is within an operating phase during which the particulates filter traps the particles.

6. A diagnostic method according to claim 5 **characterised in that** if the measured value is less than the estimated variation it is deduced therefrom that the particulates filter has deteriorated and is therefore no longer performing its filtration function.

7. A diagnostic method according to one of claims 1 to 4 **characterised in that** said period is within an operating phase during which the particulates filter is regenerated.

8. A diagnostic method according to claim 7 **characterised in that** if the measured value is less than the estimated variation it is deduced therefrom that

**EP 1 242 723 B1**

the regeneration means are failing.

FIG1

EP 1 242 723 B1

FIG 2